# EUROPEAN PATENT APPLICATION

(11) **EP 2 328 345 A2**
(43) Date of publication of application: **01.06.2011**
(21) Application number: 10189657.9
(22) Date of filing: 02.11.2010
(51) Int. Cl.: H04N 5/445, H04N 7/16, H04N 7/24, H04L 29/08, H04N 5/44

(54) **Display apparatus controlled by a client terminal using a remote user interface tranmitted by said display apparatus**

(30) Priority: 13.11.2009 KR 20090109775
(71) Applicant: Samsung Electronics Co., Ltd., Gyeonggi-do (KR)
(72) Inventor: Chang, Woo-yong, Yongin-si, Gyeonggi-do (KR); Yu, Seung-dong, Osan-si, Gyeonggi-do (KR); Park, Se-jun, Yongin-si, Gyeonggi-do (KR); Moon, Min-jeong, Seongnam-si, Gyeonggi-do (KR)
(74) Representative: Jenkins, Richard Gavin

(57) **Abstract**

Disclosed is a display apparatus which includes a communication unit which communicates with a plurality of client terminals; a receiver which receives a broadcasting signal; a signal processor which processes the broadcasting signal received by the receiver; a display unit which displays thereon an image corresponding to the broadcasting signal processed by the signal processor; a storage unit which stores therein a viewing history relating to the plurality of client terminals; and a controller which controls the communication unit to transmit to the client terminal Remote User Interface (RUI) information corresponding to the connected client terminal based on a viewing history relating to the connected client terminal.

## Description

### BACKGROUND OF THE INVENTION

### 1. Field of the Invention

The present invention relates generally to a display apparatus, a client terminal and a control method thereof, and more particularly, to a display apparatus, a client terminal and a control method thereof which provides a remote user interface tailored to the characteristics of each client terminal by using a viewing history accessed by each client terminal to enable a client terminal user to intuitively access desired information.

### 2. Description of the Related Art

Generally, a display apparatus, such as a TV, is accessed by a plurality of users. Due to its characteristics, it is difficult for a display apparatus to provide a User Interface (UI) tailored to each of a plurality of users. Further, even if the display apparatus provides the UI tailored to each user, the user has to search the tailored UI through several phases. Accordingly, a new method which provides a more efficient, tailored UI and allows more intuitive access to the tailored UI is

### SUMMARY OF THE INVENTION

Accordingly, the present invention provides a display apparatus, a client terminal and a control method thereof which provides a new method that enables a client terminal user to intuitively access desired information by using the viewing history accessed by each client terminal and by providing a remote user interface tailored to the characteristics of each client terminal.

According to an embodiment of the present invention, a display apparatus is provided, which includes a communication unit which communicates with a plurality of client terminals; a receiver which receives a broadcasting signal; a signal processor which processes the broadcasting signal received by the receiver; a display unit which displays thereon an image corresponding to the broadcasting signal processed by the signal processor; a storage unit which stores therein a viewing history relating to the plurality of client terminals; and a controller which controls the communication unit to transmit to the client terminal Remote User Interface (RUI) information corresponding to the connected client terminal based on a viewing history relating to the connected client terminal if the plurality of client terminals is connected through the communication unit, and controls the receiver, signal processor and display unit to receive, process and display the broadcasting signal corresponding to a user's input received from the client terminal.

According to another embodiment of the present invention, a control method of a display apparatus is provided, the control method includes storing a viewing history relating to a plurality of client terminals; connecting to at least one of the plurality of client terminals; generating remote user interface (RUI) information corresponding to the client terminals based on the viewing history relating to the connected client terminal; transmitting to the client terminal the generated RUI information; and receiving, processing and displaying a broadcasting signal corresponding to a user's input received from the client terminal.

The control method may further include transmitting to the client terminal the stored viewing history relating to the connected client terminal.

According to another embodiment of the present invention, a client terminal is provided, which includes a communication unit which communicates with a display apparatus; a signal processor which processes RUI information received from the communication unit; a display unit which displays thereon the RUI based on the RUI information processed by the signal processor; a user input unit which receives a user's input; and a controller which controls the communication unit to receive RUI information corresponding to the client terminal upon being connected to the display apparatus by the communication unit, and controls the signal processor and the display unit to process and display the RUI based on the RUI information, and controls the communication unit to transmit to the display apparatus a user's input performed by referring to the RUI.

The client terminal may further include a storage unit, and the controller may control the storage unit to store therein the received viewing history relating to the client terminal.

According to another embodiment of the present invention, a control method of a client terminal is provided. The control method includes connecting to a display apparatus; receiving remote user interface (RUI) information corresponding to the client terminal; displaying a RUI based on the received RUI information; receiving a user's input performed by referring to the RUI; and transmitting the user's input to the display apparatus.

The control method may further include receiving a viewing history relating to the client terminal from the connected display apparatus. The control method may further include storing the viewing history relating to the received client terminal. The control method may further include transmitting the stored viewing history to a second display apparatus if connected to the second display apparatus; and receiving second RUI information corresponding to the transmitted viewing history from the display apparatus.

### BRIEF DESCRIPTION OF THE DRAWINGS

The above or other aspects, features and advantages of certain embodiments of the present invention will become apparent and more readily understood from the following description, taken in conjunction with the accompanying drawings, in which:
FIG. 1 is a diagram illustrating a Digital Living Network Alliance (DLNA) network, which includes a display apparatus and client terminals according to an embodiment of the present invention;
FIG. 2 is a block diagram of the display apparatus according to an embodiment of the present invention;
FIG. 3 is a block diagram of the client terminal according to an embodiment of the present invention;
FIG. 4 is a diagram which illustrates a remote RUI according to an embodiment of the present invention;
FIG. 5 is a diagram which illustrates a RUI according to another embodiment of the present invention;
FIG. 6 is a diagram which illustrates a RUI according to still another embodiment of the present invention;
FIGS. 7A and 7B are diagrams which illustrate detailed control processes of the RUI according to the embodiment of the present invention;
FIG. 8 is a diagram which illustrates an operation of the client terminal according to an embodiment of the present invention;
FIG. 9 is a process diagram which illustrates a control process of the display apparatus according to an embodiment of the present invention; and
FIG.10 is a process diagram which illustrates a control process of the client terminal according to an embodiment of the present invention.

### DETAILED DESCRIPTION OF THE EMBODIMENTS OF THE PRESENT INVENTION

Hereinafter, embodiments of the present invention will be described in detail with reference to accompanying drawings so as to be easily understood by a person having ordinary skill in the art. Various changes and modifications of the embodiments described herein can be made without departing from the scope and spirit of the invention. In addition, descriptions of well-known functions and parts are omitted for clarity, and like reference numerals refer to like elements throughout.

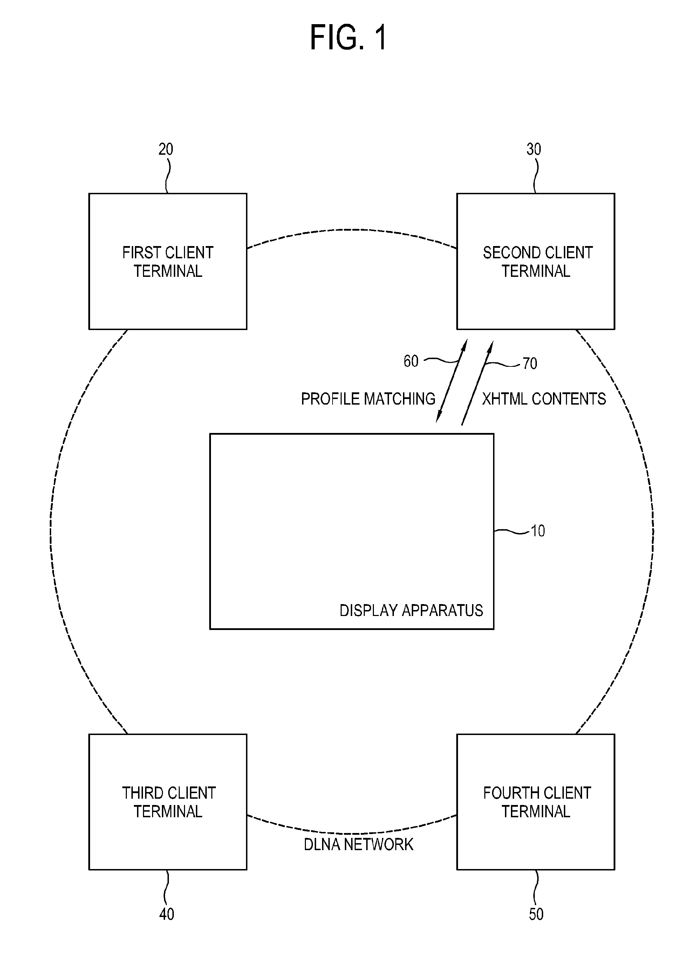

FIG. 1 illustrates a Digital Living Network Alliance (DLNA) network which includes a display apparatus and client terminals according to an embodiment of the present invention.

A display apparatus 10 and client terminals 20, 30, 40 and 50 according to an embodiment of the present invention may form DLNA network. The DLNA network forms a compatible platform based on the existing industrial standards to thereby realize industrial convergence. Such a DLNA network is based on UPnP by which all devices in a network recognize each other and share information. Also, all devices in a network may communicate with each other by Wi-Fi, Bluetooth®, or by wired communication and Internet Protocol (IP) communication.

Mobile devices, display apparatuses, personal computers (PCs) and electronic devices which are included in the DLNA network may freely share media contents such as music, photos and video through the network. In FIG.1, display apparatus 10, a first client terminal 20, a second client terminal 30, a third client terminal 40 and a fourth client terminal 50 may automatically recognize each other and share media contents.

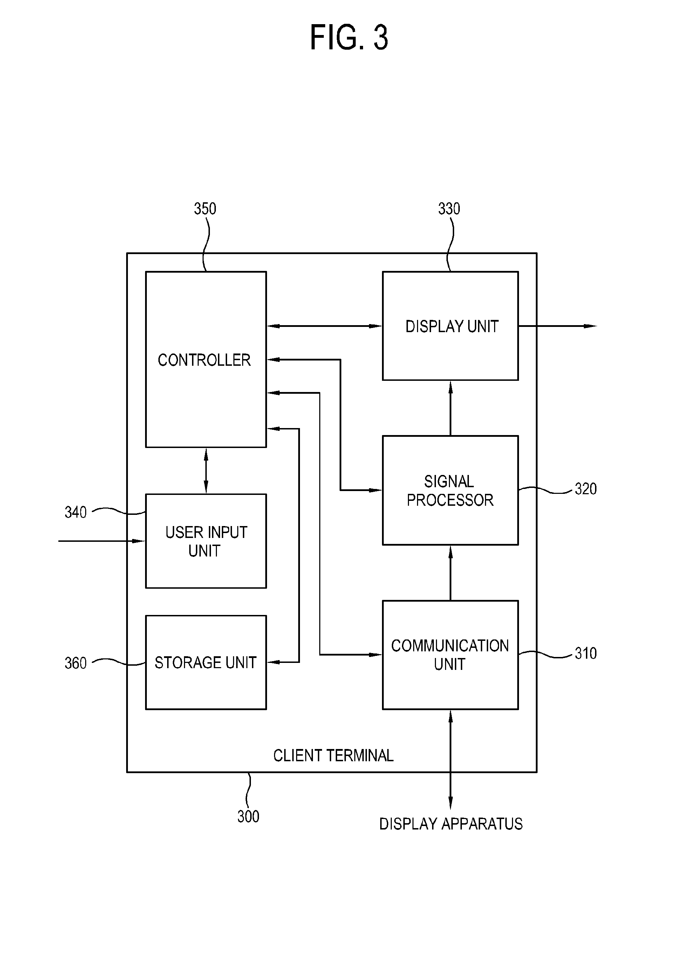

The plurality of devices that is included in the DLNA network may control each other through a RUI. To do the foregoing, the plurality of devices in the DLNA network may transmit and receive RUI information by Wi-Fi, Bluetooth®, Zigbee, Infrared (IR) communication, Radio Frequency (RF) communication and wired communication. That is, as shown in FIG. 1, if display apparatus 10 recognizes the second client terminal 30, display apparatus 10 generates RUI information that matches a profile of the second client terminal 30. Then, display apparatus 10 transmits the generated RUI information 70 to the second client terminal. The RUI may be transmitted as a text type such as HTML or XML. In this case, the RUI which is transmitted to the second client terminal 30 by display apparatus 10 may include XHTML contents as shown in FIG. 3. Also, the RUI may be transmitted as images such as bitmap or JPEG type. The second client terminal 30 may transmit to display apparatus 10 a remote control signal to control display apparatus 10 in a remote place through the RUI information 70 received from display apparatus 10.

If display apparatus 10 is a Digital Television (DTV), the remote control signal may include a control signal to select channels of the DTV or to reserve viewing of programs. Display apparatus 10 may store in a storage unit a viewing history according to the remote control signal received from the second client terminal 30.

According to another embodiment, the second client terminal 30 may download and execute a remote controller application from an external web server (not shown) to control display apparatus 10. Display apparatus 10 may recognize access by the second client terminal 30 and request and receive a profile of the second client terminal 30. If display apparatus 10 is controlled by the remote controller application executed by the second client terminal 30, display apparatus 10 may store in the storage unit the viewing history based on the foregoing control operation.

Upon storing the viewing history of the second client terminal 30, display apparatus 10 provides information on preferred channels or preferred programs based on the stored viewing history to the second client terminal 30 to provide a tailored service for a user.

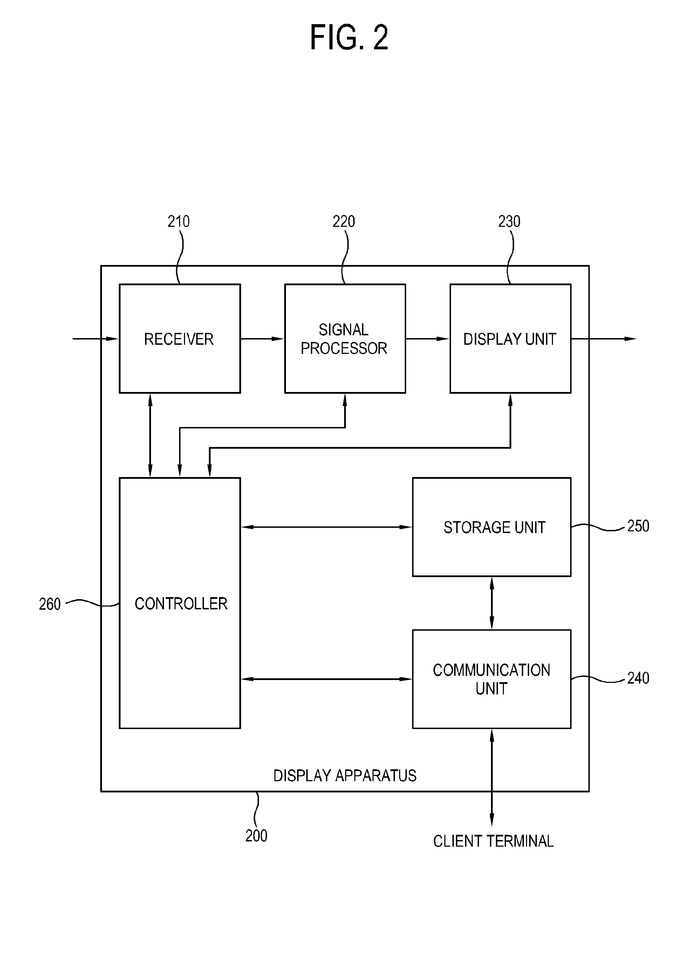

FIG. 2 is a block diagram of a display apparatus 200 according to an embodiment of the present invention.

The display apparatus 200 according to an embodiment of the present invention may include a DTV, a desktop computer, a set-top box or a Large Format Display (LFD). Display apparatus 200 according to the embodiment of the present invention may include a receiver 210, a signal processor 220, a display unit 230, a communication unit 240, a storage unit 250 and a controller 260.

The receiver 210 may receive a broadcasting signal. The broadcasting signal may include a digital broadcasting signal received as a Transport Stream (TS) or an IP broadcasting signal received as a packet by the Internet Protocol (IP).

The signal processor 220 may process a broadcasting signal that is received by the receiver 210. More specifically, the signal processor 220 may decode an encoded image signal or demodulate a receive signal into an original signal.

The display unit 230 may display thereon an image based on a broadcasting signal that is processed by the signal processor 220. To do the foregoing, display unit 230 may include a panel driver and a display panel including a liquid crystal display (LCD) panel, an organic light emitting display (OLED) panel or a plasma display panel (PDP).

The communication unit 240 may communicate with a plurality of client terminals 300. More specifically, communication unit 240 may transmit remote user interface (RUI) information to the client terminals 300 by Wi-Fi, Bluetooth®, Zigbee, IR communication, RF communication and wired communication.

The storage unit 250 may store therein a viewing history of the plurality of client terminals 300. In this case, the viewing history may be accessed by each of the client terminals 300. For example, the viewing history may include channel selection, program reservation, etc by the client terminals 300. More specifically, storage unit 250 may store the viewing history of the client terminals 300 corresponding to the profile of the client terminals 300. The storage unit 250 may establish a database tailored for each client terminal 300 based on the viewing history. The profile of the client terminals 300 may include identification information and preference information of the client terminals 300.

According to an embodiment, the identification information of the client terminals 300 may include inherent information of the client terminals 300. More specifically, if the client terminals 300 include a mobile terminal, the identification information may be a combination of a model name and the last four digits of telephone number. For example, if the model name of the device is SCH-W580 and the telephone number is 011-234-5678, the identification information is SCHW5805678.

Upon connection to the plurality of lient terminals 300, the controller 260 may control communication unit 240 to transmit to client terminal 300 the RUI information corresponding to the connected client terminals 300 by referring to the viewing history. In this case, the controller 260 may control communication unit 240 to transmit the RUI information by Wi-Fi, Bluetooth®, Zigbee, IR communication, RF communication and wired communication.

The RUI information may include a UI type and content displayed on the UI. The UI type may include video, texts and audio. The content which is displayed on the UI may include preferred channels, preferred programs and preferred genres.

According to another embodiment, the controller 260 may generate information of the preferred channels, the preferred programs and the preferred genres by referring to the viewing history. More specifically, the controller 260 may register a channel (or a program) which is viewed for predetermined time or by the number of predetermined times as a preferred channel (or a preferred program). For example, if a channel (or a program) A is viewed for 30 minutes or more, or three times or more, it may be registered as a preferred channel (or a preferred program).

In case of the preferred genre, if at least one program that belongs to a predetermined genre is viewed for predetermined time or by the number of predetermined times, the predetermined genre may be registered as a preferred genre. For example, if programs that belong to a genre X are viewed for one hour or more or three times or more a week, the genre X may be registered as the preferred genre.

The registered preferred channel, preferred program and preferred genre may be updated at predetermined intervals. For example, if the registered preferred program is not viewed for one month, such program is deleted from the preferred program.

According to another embodiment, the controller 260 may generate information relating to the preferred channel, preferred program and preferred genre by referring to the viewing history. More specifically, in case of the preferred channel, a channel which is not registered as the preferred channel among the most frequently viewed for a predetermined period may be sequentially displayed. In this case, a few top channels may be displayed only. For example, top three channels which were not registered as the preferred channels among the channels viewed most frequently for three days may be displayed.

The controller 260 may control communication unit 240 to communicate with the plurality of client terminals 300 through UPnP, Wi-Fi, Bluetooth® and wired communication like a power line communication.

The controller 260 may control the receiver 210, the signal processor 220 and the display unit 230 to respectively receive, process and display a broadcasting signal according to a user's input received from client terminal 300. For example, if a user selects a channel A through client terminal 300, the controller 260 controls the receiver 210, the signal processor 220 and the display unit 230 to receive, process and display a broadcasting signal received from the channel A.

The controller 260 may control communication unit 240 to transmit the viewing history relating to the connected client terminal 300 stored in storage unit 250 to the plurality of client terminals 300 connected through communication unit 240.

FIG. 3 is a block diagram of client terminal 300 according to the embodiment of the present invention.

The client terminal 300 according to the embodiment of the present invention may include a mobile terminal, a laptop computer, a desktop computer, a personal digital assistant (PDA), or an electronic device. Client terminal 300 according to the embodiment of the present invention may include a communication unit 310, a signal processor 320, a display unit 330, a user input unit 340, a controller 350 and a storage unit 360.

Communication unit 310 may communicate with display apparatus 200. More specifically, communication unit 310 may communicate with display apparatus 200 through Wi-Fi, Bluetooth®, Zigbee, IR communication, RF communication and wired communication, and receive the RUI information from display apparatus 200. Communication unit 310 may communicate with display apparatus 200 through UPnP, Wi-Fi, Bluetooth® and wired communication like power line communication and transmit to display apparatus 200 a user's input that is input to client terminal 300.

The signal processor 320 may process the RUI information received by communication unit 310.

The display unit 330 may display thereon a RUI based on the RUI information processed by the signal processor 320. To do the foregoing, display unit 330 may include a panel driver and a display panel such as a liquid crystal display (LCD) panel, an organic light emitting display (OLED) panel, or a plasma display panel (PDP).

The user input unit 340 may receive a user's input. A user's input may include an input by touch, input by a mouse or an input by a key button.

Upon connection to display apparatus 200, the controller 350 may control communication unit 310 to receive the RUI information corresponding to the client terminal 300. In this case, the controller 350 may control communication unit 310 to receive the RUI information by Wi-Fi, Bluetooth®, Zigbee, IR communication, RF communication and wired communication.

The controller 350 may control the signal processor 320 and display unit 330 to process and display the RUI based on the RUI information received from display apparatus 200. The controller 350 may also control communication unit 310 to transmit to display apparatus 200 a user's input performed by referring to the RUI. To do the foregoing, the controller 350 may control communication unit 310 to communicate with display apparatus 200 through UPnP, Wi-Fi, Bluetooth® and wired communication like a power line communication.

The RUI information may include a UI type and content displayed on the UI. The UI type may include video, texts and audio. The content which is displayed on the UI may include preferred channels, preferred programs and preferred genres.

The controller 350 may control communication unit 310 to receive a viewing history relating to the client terminal 300 from display apparatus 200 connected through communication unit 310. The controller 350 may store in storage unit 360 the received viewing history.

If client terminal 300 is connected to the second display apparatus through communication unit 310, the controller 350 may control the communication unit 310 to transmit to the second display apparatus the viewing history stored in storage unit 360 and to receive second RUI information from the second display apparatus corresponding to the viewing history transmitted to the second display apparatus.

The storage unit 360 stores therein the viewing history relating to the client terminal 300 and received from display apparatus 200 through communication unit 310.

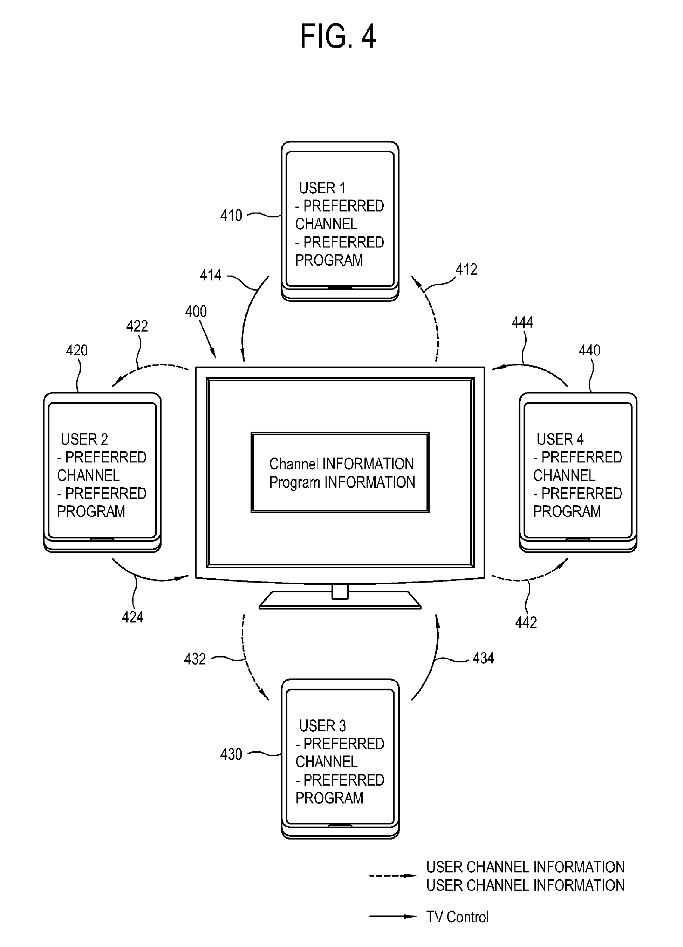

FIG. 4 illustrates a RUI according to the embodiment of the present invention.

The RUI according to the embodiment of the present invention may include a tailored RUI corresponding to each of the client terminals 410, 420, 430 and 440. More specifically, the RUI is generated to meet the characteristics of the respective client terminals 410, 420, 430 and 440, and the plurality of client terminals 410, 420, 430 and 440 receive different RUIs from display apparatus 400. In this case, the RUI may include information of preferred channels or preferred programs of the client terminals 410, 420, 430 and 440.

As shown in FIG. 4, display apparatus 400 transmits RUI information corresponding to each of the client terminals 410, 420, 430 and 440. More specifically, display apparatus 400 transmits to the first client terminal 410 RUI information including information of the preferred channels or preferred programs of the first client terminal 410 (412). Display apparatus 400 transmits to the second client terminal 420 RUI information including information of the preferred channels or preferred programs of the second client terminal 420 (422). Display apparatus 400 transmits to the third client terminal 430 RUI information including information of the preferred channels or preferred programs of the third client terminal 430 (432). Display apparatus 400 transmits to the fourth client terminal 440 RUI information including information of the preferred channels or preferred programs of the fourth client terminal 440 (442). In this case, each of the client terminals 410, 420, 430 and 440 transmits to display apparatus 400 a user's input performed by referring to the RUI (414, 424, 434 and 444).

Due to the characteristics of display apparatus 400, a plurality of users accesses display apparatus 400. In this case, it is possible to manage each user's viewing history to display apparatus 400 by using the viewing history accessed by each of the client terminals 410, 420, 430 and 440 and to provide a RUI tailored to each user based on the viewing history.

According to the present embodiment, as the tailored RUI is transmitted to users' client terminals 410, 420, 430 and 440 by using the DLNA network, a user may intuitively access the information meeting user's characteristics.

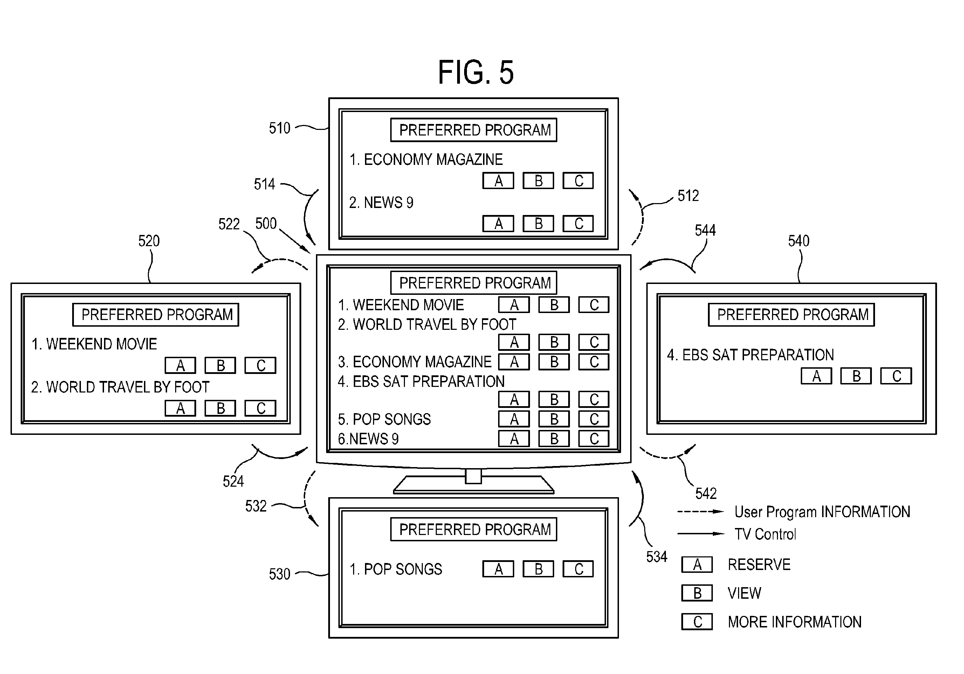

FIG. 5 illustrates a RUI according to another embodiment of the present invention.

The RUI according to another embodiment of the present invention may correspond to each of client terminals 510, 520, 530, and 540 and may be the same as a UI displayed on a display apparatus 500.

The plurality of client terminals 510, 520, 530, and 540 according to the present embodiment receives RUIs which are the same as UIs displayed on display apparatus 500 (512, 522, 532 and 542). Referring to FIG. 5, a user interface which is displayed in display apparatus 500 relates to a preferred program, and provides a title of the preferred program, a reserve button, a view button, and a more information button. The RUIs which are displayed on each of the client terminals 510, 520, 530, and 540 also relate to the preferred program, and provides a title of the preferred program, a reserve button, a view button, and a more information button. That is, the UI which is displayed in display apparatus 500 is the same in type as the RUIs displayed on the plurality of client terminals 510, 520, 530, and 540.

In this case, each of the plurality of client terminals 510, 520, 530, and 540 receives a tailored RUI meeting its own characteristics. Referring to FIG. 5, the RUI which is provided to the client terminals 510, 520, 530, and 540 displays thereon user's preferred program information based on the viewing history accessed by the client terminals 510, 520, 530, and 540. Accordingly, a user may intuitively access the user's preferred program.

Each of the client terminals 510, 520, 530, and 540 transmits to display apparatus 200 a user's input performed by referring to the received RUI information (514, 524, 534 and 544).

According to the present embodiment, the RUI which is provided to the client terminals 510, 520, 530, and 540 is the same as the UI displayed on display apparatus 500. Accordingly, a user may easily control display apparatus 500 by using the user's personal client terminals 510, 520, 530, and 540. In this case, a user directly controls the RUI displayed on the client terminals 510, 520, 530, and 540 through the client terminals 510, 520, 530, and 540 rather than controlling the UI displayed on display apparatus 500 through client terminals 510, 520, 530, and 540.

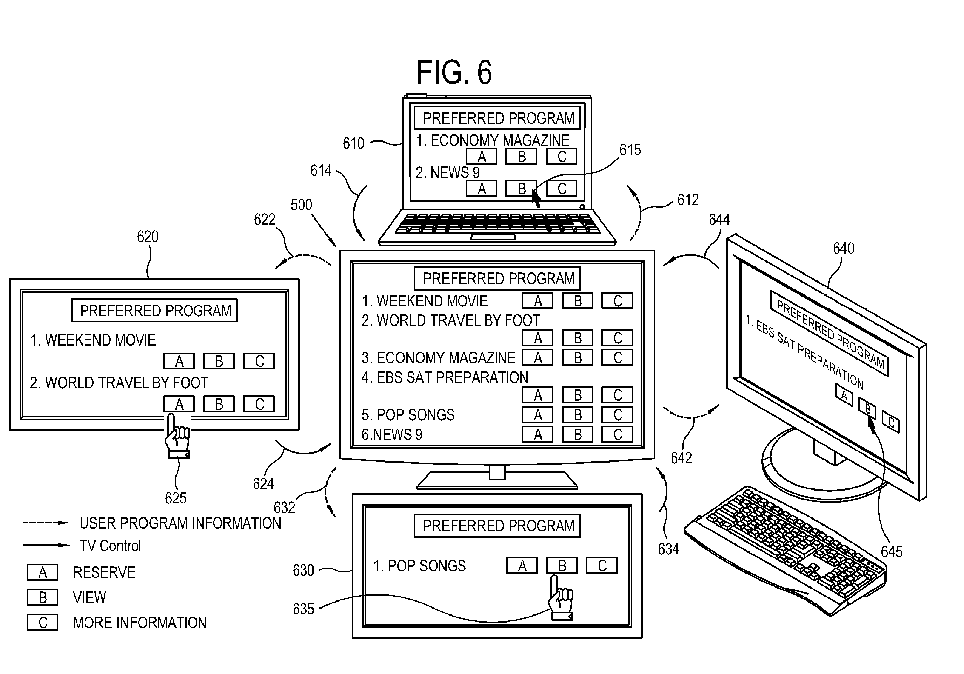

FIG. 6 illustrates a RUI according to another embodiment of the present invention.

The RUI according to another embodiment of the present invention may correspond to various types of client terminals 610, 620, 630 and 640, and may be controlled by a controlling means of the client terminals 610, 620, 630 and 640.

Referring to FIG. 6, each of the client terminals 610, 620, 630 and 640 displays thereon tailored UIs of display apparatus 600 which meet the characteristics of the client terminals 610, 620, 630 and 640 (612, 622, 632 and 642). More specifically, the RUI which is displayed on the client terminals 610, 620, 630 and 640 displays thereon preferred program information based on the viewing history accessed by the client terminals 610, 620, 630 and 640.

The first client terminal 610 is a laptop computer. In this case, a user of the first client terminal 610 may control the RUI by using such controlling means as a mouse. More specifically, while working by using a laptop computer, a user may click a reserve button of "News 9" by using a mouse on the RUI (615). In this case, user's input information is transmitted to display apparatus 600 (614), and display apparatus 600 reserves "News 9" based on the input information.

The second and third client terminals 620 and 630 are mobile terminals. In this case, users of the second and third client terminals 620 and 630 control the RUI displayed on each screen by touching a touch screen. More specifically, a user of the second client terminal 620 may click a reserve button of "World Travel by Foot" by using a finger (625), and a user of the third client terminal 630 may click a view button of "Pop Songs" by using a finger (635). In this case, user's touch information is transmitted to display apparatus 600 (624 and 634), and display apparatus 600 timer-records "World Travel by Foot" and receives and displays "Pop Songs" based on the touch information.

The fourth client terminal 640 is a desktop computer. In this case, a user of the fourth client terminal 640 controls the RUI by using such controlling means as mouse. More specifically, while using the desktop computer, a user may click a view button of "EBS SAT Preparation" by using a mouse on the RUI (645). User's input information is transmitted to display apparatus 600 (644), and display apparatus 600 receives and displays "EBS SAT Preparation" based on the input information. As described earlier, "Pop Songs" is currently broadcast by a user of the third client terminal 630. Accordingly, display apparatus 600 may display two programs as PIP or transmit to the fourth client terminal 640 content received according to a user's selection. In this case, display apparatus 600 and the fourth client terminal 640 may form the DLNA network and freely share media contents.

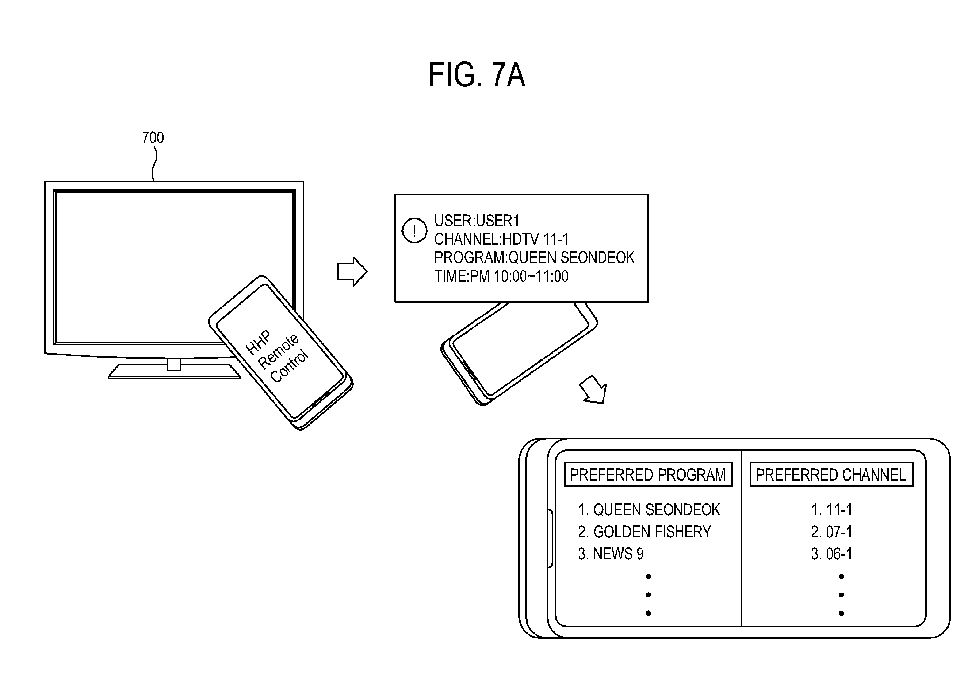

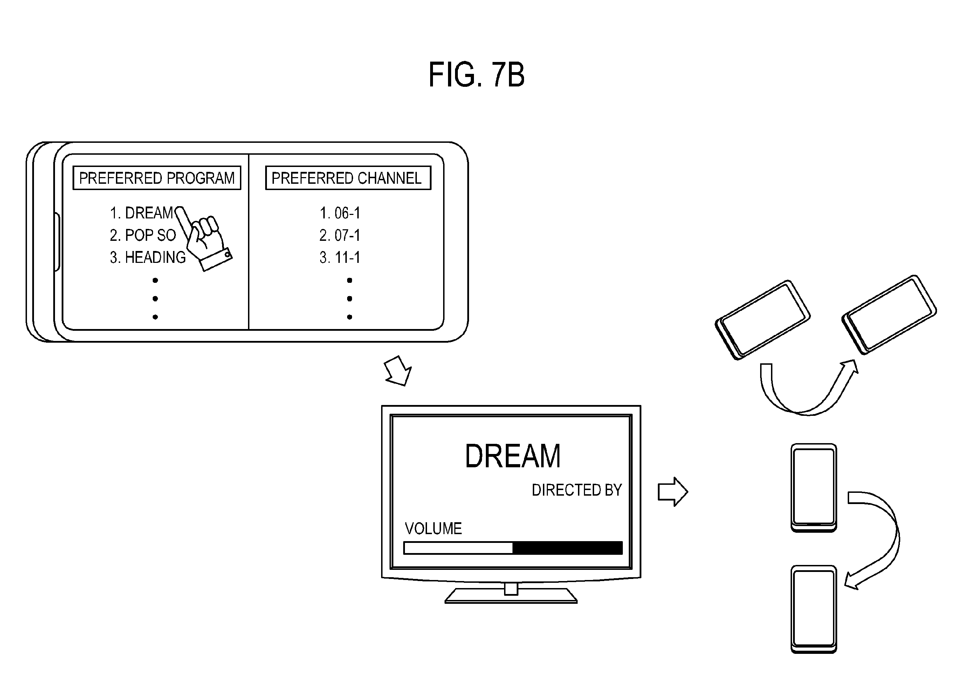

FIGS. 7A and 7B illustrate a detailed control process of the RUI according to the embodiment of the present invention.

In FIG. 7A, a user controls a TV viewing through display apparatus 700 by using the user's client terminal 710. For example, a user may select a desired channel or reserve a desired program by using the client terminal 710. If the client terminal 710 is initially connected to display apparatus 700, display apparatus 700 receives the profile from the client terminal 710, and transmits the RUI for the client terminal 710. The RUI includes a UI that is used for controlling display apparatus 700 and acts as a remote controller.

The client terminal 710 may control display apparatus 700 by downloading from an external web server (not shown) and executing a remote controller application controlling display apparatus 700.

Accordingly, upon receiving a control signal such as channel selection and program viewing reservation from client terminal 710, display apparatus 700 may store the control signal as viewing history of the client terminal 710. More specifically, display apparatus 700 remembers the channel or program selected or viewed through the client terminal 710 and stores such channel or program corresponding to the client terminal 710.

If client terminal 710 is connected thereafter, display apparatus 700 provides client terminal 710 with the RUI reflecting the characteristics of the client terminal 710. More specifically, display apparatus 700 may provide the client terminal 710 with a preferred channel list or a preferred program list of the client terminal 710.

In FIG. 7B, a user receives a RUI through the user's client terminal 710. In this case, a user may directly access the preferred program by using the preferred program list displayed on the user's client terminal 710.

A user may control TV viewing by using client terminal 710. If client terminal 710 includes a gravity sensor or a gyro sensor, a user may control display apparatus 700 through the motion of the client terminal 710. For example, a user may adjust the volume of the viewing channel by moving the client terminal 710 up and down.

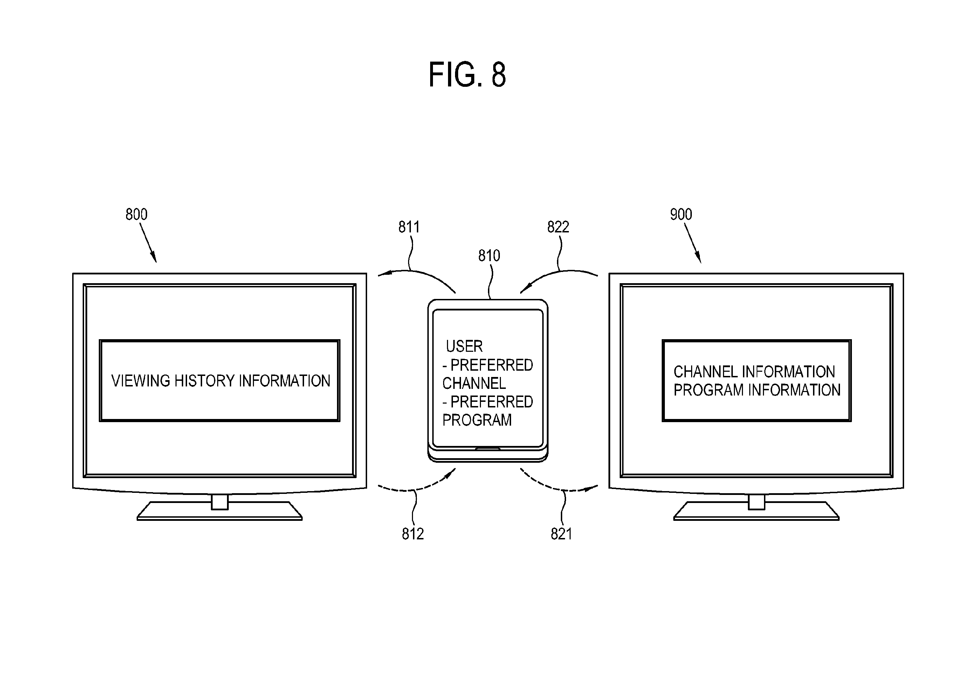

FIG. 8 illustrates an operation of a client terminal 810 according to the embodiment of the present invention.

As shown therein, if a user controls TV viewing through a first display apparatus 800 by using the client terminal 810, the first display apparatus 800 stores in the storage unit the viewing history of the client terminal 810.

Upon receiving a request for transmitting the viewing history of the client terminal 810 (811), the first display apparatus 800 transmits to the client terminal 810 the viewing history relating to the client terminal 810 and stored in the storage unit (812). The client terminal 810 stores the received viewing history therein.

Then, client terminal 810 initiates communication with a second display apparatus 900. Client terminal 810 transmits the profile, together with the stored viewing history, to the second display apparatus 900 (821). The second display apparatus 900 stores in the storage unit and manages the viewing history received from the client terminal 810, and transmits to client terminal 810 the RUI reflecting the characteristics of client terminal 810 based on the received viewing history (822). The RUI includes a preferred channel list and a preferred program list of client terminal 810. Accordingly, client terminal 810 may control the second display apparatus 900 by using the RUI received from the second display apparatus 900.

According to the present embodiment, client terminal 810 receives from the first display apparatus 800 in a user's home, stores the viewing history, and transmits such viewing history to the second display apparatus 900 located in another area by a user's movement and receives the RUI corresponding to the viewing history, thereby controlling the second display apparatus 900. A user may receive the RUI tailored to the client terminal 800 from the display apparatus located in another place as well as the user's home and control the display apparatus located in another place by only owning the client terminal 810 storing therein the viewing history. Thus, user's convenience improves.

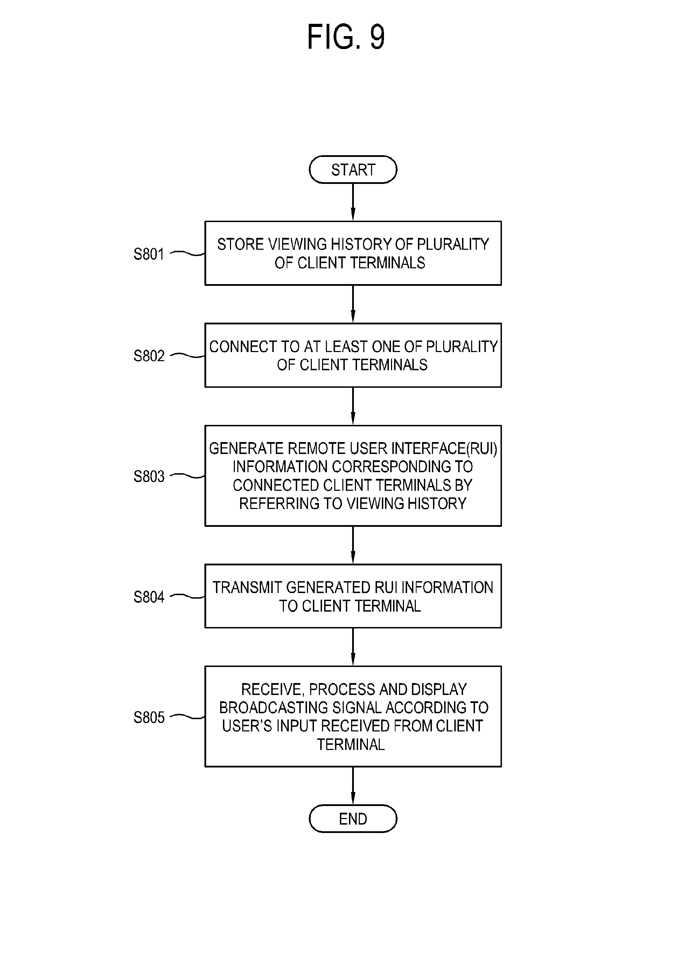

FIG. 9 illustrates a control process of display apparatus 200 according to the embodiment of the present invention.

Display apparatus 200 stores the viewing history of a plurality of client terminals 300 (S801). More specifically, display apparatus 200 stores and manages the viewing history information by client terminal 710. Display apparatus 200 is connected to at least one of a plurality of client terminals 300 (S802). Display apparatus 200 generates the RUI information corresponding to the connected client terminals 300 by referring to the stored viewing history (S803). Display apparatus 200 transmits to the client terminals 300 the generated RUI information (S804). Display apparatus 200 receives, processes and displays the broadcasting signal according to the user's input received from the client terminals 300 (S805).

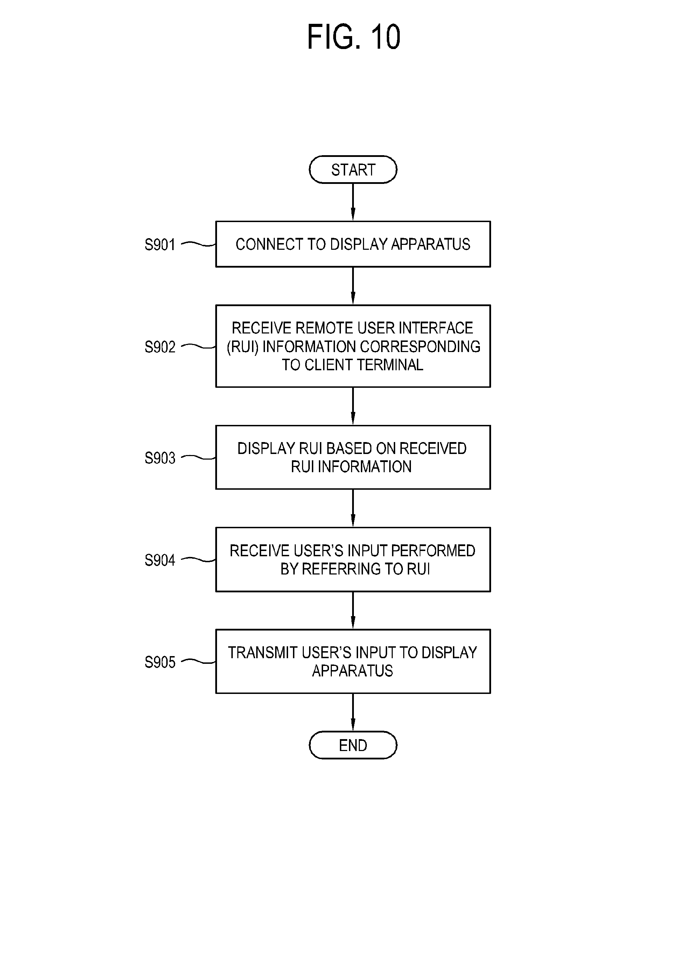

FIG. 10 illustrates a control process of the client terminal 300 according to the embodiment of the present invention.

The client terminal 300 is connected to display apparatus 200 (S901). Client terminal 300 receives the RUI information corresponding to the client terminal 300 (S902). In this case, the client terminal 300 displays thereon the RUI based on the received RUI information (S903). Client terminal 300 receives a user's input performed by referring to the RUI (S904). Client terminal 300 transmits the user's input to display apparatus 200 (S905).

As described above, a display apparatus, a client terminal and a control method thereof according to the present invention provides a remote user interface tailored to characteristics of each client terminal and enables a user to intuitively access desired information.

Although several embodiments have been shown and described, it will be appreciated by those skilled in the art that changes may be made in these embodiments without departing from the principles and spirit of the invention, the scope of which is defined in the appended claims.

## Claims

1. A display apparatus comprising:
a communication unit which communicates with a plurality of client terminals;
a receiver which receives a broadcasting signal;
a signal processor which processes the broadcasting signal received by the receiver;
a display unit which displays thereon an image corresponding to the broadcasting signal processed by the signal processor;
a storage unit which stores therein a viewing history relating to the plurality of client terminals; and
a controller which controls the communication unit to transmit to the client terminal Remote User Interface (RUI) information corresponding to the connected client terminal based on a viewing history relating to the connected client terminal if at least one of the plurality of client terminals is connected through the communication unit, and controls the receiver, signal processor and display unit to receive, process and display the broadcasting signal corresponding to a user's input received from the client terminal.

2. The display apparatus according to claim 1, wherein the RUI information comprises at least one of a User Interface (UI) type and content displayed on the UI.

3. The display apparatus according to claim 2, wherein the UI type comprises at least one of an image, a text and an audio.

4. The display apparatus according to claim 2, wherein the content which is displayed on the UI comprises at least one of a preferred channel, a preferred program and a preferred genre.

5. The display apparatus according to claim 4, wherein a channel or a program that is viewed for a predetermined time and/or by a number of predetermined times is registered as the preferred channel or the preferred program.

6. The display apparatus according to claim 4, wherein a genre of at least one of the programs which belongs to a predetermined genre is registered as the preferred genre if at least one of the programs is viewed for a predetermined time and/or by a number of predetermined times.

7. The display apparatus according to claim 4, wherein the controller generates information relating to at least one of the preferred channel, the preferred program and the preferred genre by referring to the stored viewing history.

8. The display apparatus according to claim 1, wherein the controller controls the communication unit to communicate with the plurality of client terminals through at least one of UPnP, Wi-Fi, Bluetooth® and wired communication.

9. The display apparatus according to claim 1, wherein the controller controls the communication unit to transmit to the client terminal the stored viewing history relating to the connected client terminal.

10. A client terminal comprising:
a communication unit which communicates with a display apparatus;
a signal processor which processes Remote User Interface (RUI) information received from the communication unit;
a display unit which displays thereon the RUI based on the RUI information processed by the signal processor;
a user input unit which receives a user's input; and
a controller which controls the communication unit to receive RUI information corresponding to the client terminal upon being connected to the display apparatus by the communication unit, and controls the signal processor and the display unit to process and display the RUI based on the RUI information, and controls the communication unit to transmit to the display apparatus a user's input performed by referring to the RUI.

11. The client terminal according to claim 10, wherein the content which is displayed on the UI comprises at least one of a preferred channel, a preferred program and a preferred genre.

12. The client terminal according to claim 11, wherein the preferred channel or the preferred program comprises a channel or a program that is viewed for a predetermined time and/or by a number of predetermined times.

13. The client terminal according to claim 11, wherein the preferred genre comprises a genre of at least one of the programs which is viewed for a predetermined time and/or by a number of predetermined times.

14. The client terminal according to claim 10, wherein the controller controls the communication unit to receive a viewing history relating to the client terminal, from the connected display apparatus.

15. The client terminal according to claim 14, further comprising a storage unit, wherein
the controller controls the storage unit to store therein the received viewing history relating to the client terminal.
